# EUROPEAN PATENT APPLICATION

(11) **EP 3 278 890 A1**
(43) Date of publication of application: **07.02.2018**
(21) Application number: 16772755.1
(22) Date of filing: 28.03.2016
(51) Int. Cl.: B21D 3/05, B23K 26/21, B23K 31/00

(54) **APPARATUS FOR MANUFACTURING WELDED SECTION STEEL, AND METHOD FOR MANUFACTURING WELDED SECTION STEEL**

(30) Priority: 31.03.2015 JP 2015071855
(71) Applicant: Nisshin Steel Co., Ltd., Tokyo 100-8366 (JP)
(72) Inventor: ASADA Hiroshi, Tokyo 100-8366 (JP); SAKURADA Yasuhiro, Tokyo 100-8366 (JP); IENARI Tooru, Tokyo 100-8366 (JP)
(74) Representative: Betten & Resch
(86) International application number: PCT/JP2016/059964
(87) International publication number: WO 2016/158874

(57) **Abstract**

The present invention enables easy correction of asymmetric welded shaped steel for the intended cross-sectional shape even if the respective parts of the flange materials receive different amounts of thermal deformation during welding. The welded shaped steel manufacturing device according to the present invention welds the ends of a web material (3) to flange materials (1, 2), and comprises a corrective device (100) for correcting the thermal deformation of the flange materials caused by heat input during the welding. The corrective device has flange material correcting rollers (24) that are provided at the ends of the flange materials and press the web material side of the flange materials to correct the thermal deformation from the ends of the flange materials to the parts of the flange materials joined to the web material, and web material supporting rollers (44, 45) that support the web surfaces of the web material. The flange material correcting rollers provided at the ends of the flange materials correct the thermal deformation by applying respective independent pressures to the ends of the flange materials.

## Description

### Technical Field:

The present invention relates to a device and a method for manufacturing welded shaped steel, correcting the thermal deformation caused by heat input during welding.

### Background Art:

Patent documents 1-4 describe methods for manufacturing welded H-shaped steel by joining web materials and flange materials using laser welding. In the described methods, a web material and two flange materials arranged in an H shape are to be joined in predefmed positions using laser welding. The two flange materials are the same in plate thickness, plate width and material. The web material is joined to the central parts of the flange materials in the width direction using laser welding.

In laser welding, the web material and flange materials may experience thermal strain and thus lose their perpendicular positioning for joining due to the great amount of heat input to the welding parts between the web material and flange materials. For example, if the welding parts between the web material and the two flange materials receive laser irradiation from one side of the web material (see Figure 7(a) in patent document 2), the two flange materials positioned at the ends of the web material experience thermal deformation, bending toward the web material. It should be noted, however, that the two flange materials receive the same amount of thermal deformation because they are the same in plate thickness, plate width and material and because the web material is welded to the central parts of the flange materials in the width direction. In this case, as shown in Figure 8(a) in patent document 2 and Figure 2 in patent document 4, the thermal deformation of the flange materials can be corrected by pushing corrective rollers inward from above and below the web material.

### Citation List:

### Patent Literature:

Patent document 1 Japanese Unexamined Patent Application Publication No. 2009-119485
Patent document 2 Japanese Unexamined Patent Application Publication No. 2011-83781
Patent document 3 Japanese Patent No. 5662546
Patent document 4 Japanese Unexamined Patent Application Publication No. 2012-135792

### Summary of Invention:

### Technical Problem:

There are various kinds of welded shaped steel. For example, the two flange materials joined to the ends of the web material may be different in material, plate thickness, plate width or more than one of these attributes. For another example, the two flange materials may be the same in material, plate thickness and plate width, but be different in terms of the position for joining the end of the web material (these types of welded shaped steel will hereafter be referred to as "asymmetric welded shaped steel"). The notion of asymmetric welded shaped steel also includes J-shaped steel, T-shaped steel or the like that has a welded flange material only at one end of the web material.

The former types of asymmetric welded shaped steel, when the web material is in a horizontal position, have right and left flange materials extending upward and/or downward from the welding parts. These right and left flange materials receive different amounts of thermal deformation, and therefore their thermal deformation is difficult to correct using the corrective rollers described in patent documents 2 and 4. To have their thermal deformation corrected for the intended cross-sectional shape, the right and left flange materials require appropriate corrective forces according to their different amounts of thermal deformation, but this requirement is structurally impossible for the corrective rollers in patent documents 2 and 4. Meanwhile, the latter types of asymmetric welded shaped steel have only one flange material, which does not allow use of the corrective rollers in patent documents 2 and 4 that presuppose the existence of two flange materials.

In view of these problems, the present invention provides a device and a method for manufacturing welded shaped steel, allowing easy correction of asymmetric welded shaped steel for the intended cross-sectional shape even if the respective parts of the flange materials receive different amounts of thermal deformation during welding.

### Solution to Problem:

The welded shaped steel manufacturing device according to the present invention fundamentally welds the ends of a web material to flange materials or welds one end of a web material to a flange material, and comprises a corrective device for correcting the thermal deformation of the flange materials caused by heat input during the welding. On these fundamentals, said corrective device has flange material correcting rollers that are provided at the ends of said flange materials and press the web material side of said flange materials to correct the thermal deformation from the ends of said flange materials to the parts of said flange materials joined to said web material, and web material supporting rollers that support the web surfaces of said web material. Those flange material correcting rollers provided at the ends of said flange materials correct said thermal deformation by applying respective independent pressures to the ends of said flange materials.

In the welded shaped steel manufacturing device thus constructed, the web material supporting rollers are supporting the web surfaces of the web material when the flange material correcting rollers press the web material side of the flange materials with respective independent pressures, inducing respective bending moments from the ends of the flange materials to the parts of the flange materials joined to the web material and thus correcting the thermal deformation of the respective parts. The respective independent pressures applied to the ends of the flange materials allow corrections according to the thermal deformation amounts of the respective parts.

Said corrective device may have flange material supporting rollers that are positioned on the outer surfaces of said flange materials and therefrom support the parts of said flange materials joined to the ends of said web material.

In the welded shaped steel manufacturing device thus constructed, the flange material supporting rollers are positioned on the outer surfaces of the flange materials and therefrom support the parts of the flange materials joined to the ends of the web material, which allows reduction of the bending moments induced in the web material to zero or almost zero among the bending moments induced between the flange material correcting rollers and the web material supporting rollers. Thus, the bending deformation of the web material is prevented or restrained when correcting the thermal deformation of the flange materials.

Said flange material correcting rollers may have a conical surface and therewith press the ends of said flange materials, and said corrective device may have flange material correcting roller positioning machines for said respective flange material correcting rollers that can move said flange material correcting rollers in the width directions of said flange materials.

In the welded shaped steel manufacturing device thus constructed, the flange material correcting roller positioning machines can move the flange material correcting rollers in the width directions of the flange materials so that the flange material correcting rollers are respectively arranged according to the positions of the ends of the flange materials. In addition, the flange material correcting roller positioning machines can adjust the height positions of the flange material correcting rollers to adjust the pressures that the flange material correcting rollers apply to the ends of the flange materials.

The welded shaped steel manufacturing method according to the present invention fundamentally welds the ends of a web material to flange materials or welds one end of a web material to a flange material, and includes a process for correcting the thermal deformation of the flange materials caused by heat input during the welding. On these fundamentals, the web surfaces of said web material are being supported by web material supporting rollers when flange material correcting rollers provided at the ends of said flange materials press the web material side of said flange materials with respective independent pressures and thus correct the thermal deformation from the ends of said flange materials to the parts of said flange materials joined to said web material.

In the welded shaped steel manufacturing method thus constructed, the web surfaces of the web material are being supported by the web material supporting rollers when the flange material correcting rollers provided at the ends of the flange materials press the web material side of the flange materials with respective independent pressures, inducing respective bending moments from the ends of the flange materials to the parts of the flange materials joined to the web material and thus correcting the thermal deformation of the respective parts. The respective independent pressures applied to the ends of the flange materials allow corrections according to the thermal deformation amounts of the respective parts.

In the welded shaped steel manufacturing method constructed as described above, said correction may be performed while flange material supporting rollers are positioned on the outer surfaces of said flange materials and therefrom support the parts of said flange materials joined to the ends of said web material.

In the welded shaped steel manufacturing method thus constructed, the correction is performed while the flange material supporting rollers are positioned on the outer surfaces of the flange materials and therefrom support the parts of the flange materials joined to the ends of the web material, which allows reduction of the bending moments induced in the web material to zero or almost zero among the bending moments induced between the flange material correcting rollers and the web material supporting rollers. Thus, the bending deformation of the web material is prevented or restrained when correcting the thermal deformation of the flange materials.

In the welded shaped steel manufacturing method constructed as described above, said flange material correcting rollers may have a conical surface and therewith press the ends of said flange materials, and said flange material correcting rollers may be moved in the width directions of said flange materials using flange material correcting roller positioning machines prior to said correction so that said flange material correcting rollers are respectively arranged according to the positions of the ends of said flange materials.

In the welded shaped steel manufacturing method thus constructed, the flange material correcting roller positioning machines can move the flange material correcting rollers in the width directions of the flange materials so that the flange material correcting rollers are respectively arranged according to the positions of the ends of the flange materials, which allows correction of the flange materials of welded shaped steel in various shapes and dimensions. In addition, the flange material correcting roller positioning machines can adjust the height positions of the flange material correcting rollers to adjust the pressures that the flange material correcting rollers apply to the ends of the flange materials.

### Advantageous Effects of Invention:

The present invention enables easy correction of asymmetric welded shaped steel for the intended cross-sectional shape even if the respective parts of the flange materials receive different amounts of thermal deformation during welding.

### Brief Description of Drawings:

Figure 1 is a schematic cross-sectional view showing the configuration of a corrective device in a welded shaped steel manufacturing device.
Figure 2 is a cross-sectional view showing an example of asymmetric welded H-shaped steel.
Figure 3 is a schematic perspective view of a laser welding part supporting device in the welded shaped steel manufacturing device.
Figure 4 is a cross-sectional view showing the A-A cross section in Figure 3.
Figure 5 is a schematic cross-sectional view showing the configuration of a corrective device in a welded shaped steel manufacturing device in another embodiment.
Figure 6 is a cross-sectional view showing an example of asymmetric welded shaped steel in another embodiment.
Figure 7 is a cross-sectional view showing an example of asymmetric welded H-shaped steel in another embodiment.
Figure 8 is a cross-sectional view showing an example of asymmetric welded shaped steel (J-shaped steel) in another embodiment.

### Description of Embodiments:

Below is a description of a device and a method for manufacturing welded shaped steel in an embodiment of the present invention. In this embodiment, three steel plates already formed according to predefined dimensions through cutting and other processes and arranged so as to make an H-shaped cross section are supplied to manufacture H-shaped steel. The conveyance direction of the two flange materials and the web material will be referred to as the "conveyance direction."

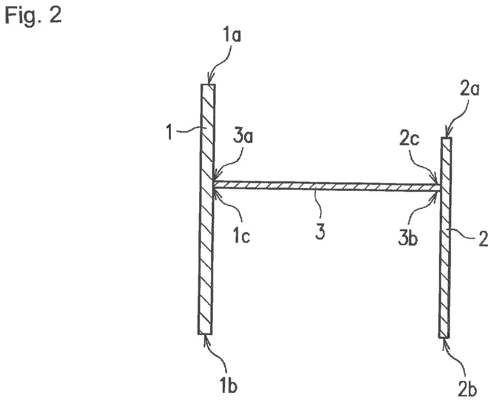

The following is a description of the welded shaped steel to be manufactured by the welded shaped steel manufacturing device in this embodiment. As shown in Figure 2, the welded shaped steel to be manufactured by the welded shaped steel manufacturing device in this embodiment is "asymmetric welded shaped steel" in which the first flange material (1) and the second flange material (2) are different in terms of plate thickness, plate width and the position for joining the web material (3). For example, the first flange material (1) is a plate with a width of 100 mm, a length of 8 m and a thickness of 3.2 mm, and the position (1c) for joining the web material (3) is 40 mm apart from the upper end (1a) and 60 mm apart from the lower end (1b). The second flange material (2) is a plate with a width of 80 mm, a length of 8 m and a thickness of 2.3 mm, and the position (2c) for joining the web material (3) is 20 mm apart from the upper end (2a) and 60 mm apart from the lower end (2b). The web material (3) is a plate with a width of approximately 100 mm, a length of 8 m and a thickness of 1.6 mm, and its ends (3a, 3b) are joined to the first and second flange materials (1, 2). The first flange material (1), the second flange material (2) and the web material (3) are made of, for example, Zn-coated steel, Al-coated steel, stainless steel, special steel, common steel or a combination of the steel types.

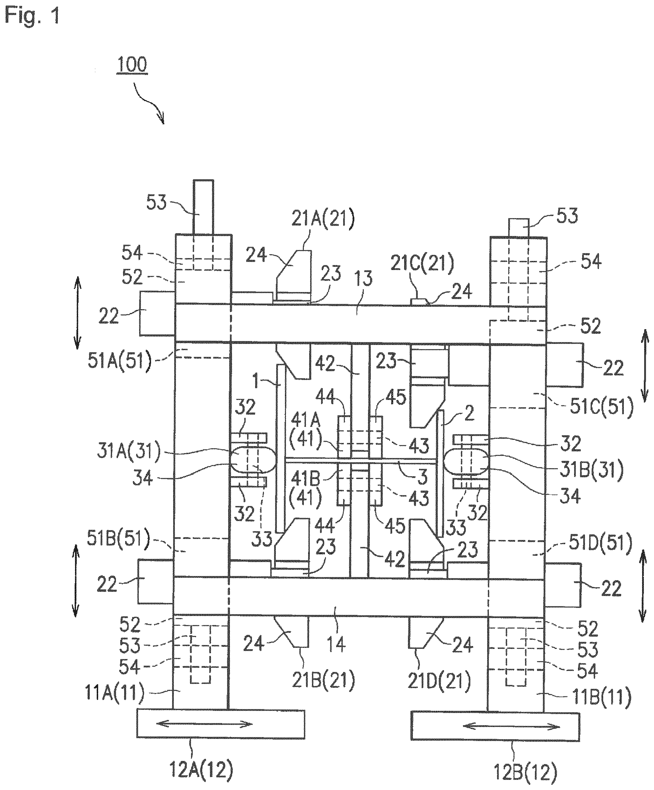

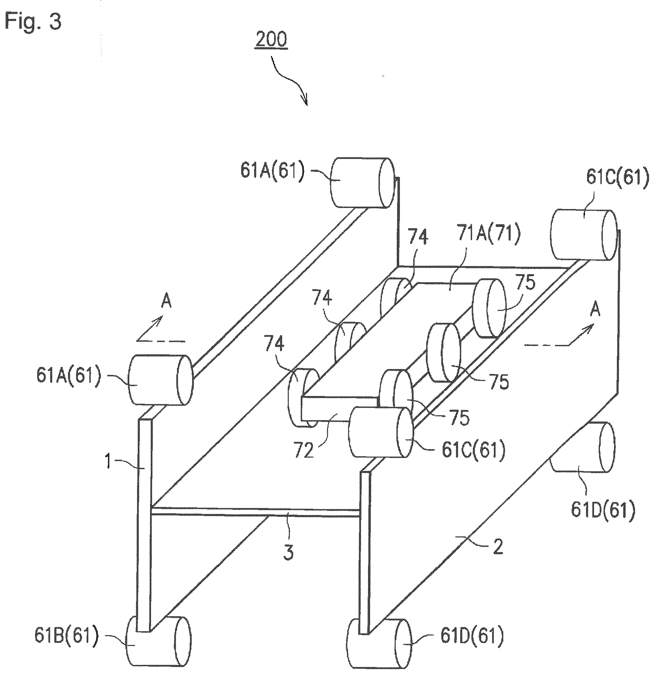

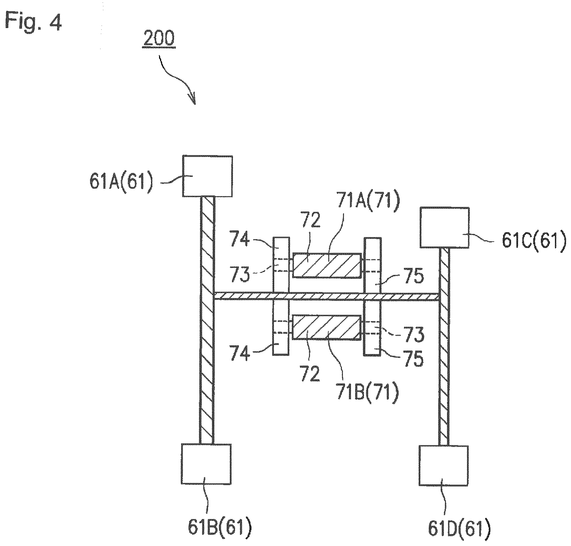

The welded shaped steel manufacturing device is composed of a plate conveying device (not illustrated), a welding part supporting device (200) (see Figures 3 and 4), a corrective device (100) (see Figure 1) and other items. These devices are arranged in line from the upstream side of the conveyance direction in the mentioned order: the plate conveying device → the welding part supporting device (200) → the corrective device (100).

The plate conveying device conveys the two flange materials (1, 2) and the web material (3), with the web material (3) positioned horizontally and sandwiched by the two flange materials (1, 2) positioned vertically and parallel to each other, to the welding part supporting device (200), holding the outer surfaces of the flange materials (1, 2).

The welding part supporting device (200) supports and conveys the flange materials (1, 2) and web material (3) conveyed by the plate conveying device in the welding points for laser welding and their surrounding areas. As shown in Figures 3 and 4, the welding part supporting device (200) has a web material sandwiching roller device (71) that sandwiches the web material (3) in the thickness directions so that this can move, and flange material sandwiching rollers (61) that sandwich the flange materials (1, 2) in the width directions so that these can move.

The web material sandwiching roller device (71) consists of a first web material sandwiching roller device (71A) placed on the upper side (one side) of the web material (3), and a second web material sandwiching roller device (71B) placed on the lower side (the other side) of the web material (3).

The first web material sandwiching roller device (71A) has rollers (74, 75) that roll along the upper surface of the web material (3) in the conveyance direction, and a supporting frame (72) that supports those rollers (74, 75) through shafts (73) so that the rollers (74, 75) can rotate. In the same way, the second web material sandwiching roller device (71B) has rollers (74, 75) that roll along the lower surface of the web material (3) in the conveyance direction, and a supporting frame (72) that supports those rollers (74, 75) through shafts (73) so that the rollers (74, 75) can rotate. The upper and lower supporting frames (72) extend along the centerline of the web material (3) in the conveyance direction as far as predefined, and support the mentioned rollers (74, 75) placed at intervals in the conveyance direction on both sides of the supporting frames (72). These rollers (74, 75) sandwich the web material (3) in the thickness directions over a predefined range in the conveyance direction that at least includes the position of the welding points in the conveyance direction. The web material sandwiching roller device (71A) is placed so as not to block the laser beams directed from above toward the welding points.

The flange material sandwiching rollers (61) are placed at the ends of the flange materials (1, 2). The positions of these rollers (61) in the vertical directions (i.e., their height positions) can each be separately adjusted, using vertical position adjusting devices (not illustrated), according to various shapes and dimensions of welded shaped steel. At each end of the flange materials (1, 2), there is more than one flange material sandwiching roller (61) (two rollers in Figure 3) placed at predefined intervals in the conveyance direction.

The corrective device (100) corrects the thermal deformation caused by heat input during welding of the flange materials (1, 2) of the welded shaped steel conveyed from the welding part supporting device (200). As shown in Figure 1, the corrective device (100) has two stands (11A, 11B), flange material correcting machines (21A-21D) attached to the upper and lower parts of the stands (11A, 11B), flange material supporting machines (31A, 31B) attached to the stands (11A, 11 B), and web material supporting machines (41 A, 41 B) attached to cross members (13, 14) connected to the stands (11A, 11B).

The two stands (11A, 11B) are erected on both sides of the conveyance route of welded shaped steel. The upper and lower parts of these stands (11A, 11B) are connected with the cross members (13, 14). The two stands (11A, 11B) are erected on stand bases (12A, 12B) that can each separately move in the directions perpendicular to the conveyance direction. Thus, the positions of these stands (11A, 11B) can be adjusted in the mentioned directions. For example, the movement of the stand bases (12A, 12B) in the mentioned directions can be realized using a common feed screw mechanism.

The flange material correcting machines (21A-21D) are attached to the stands (11A, 11B) according to the positions of the ends of the flange materials (1, 2) of the conveyed welded shaped steel. Each of these machines (21A-21D) has a horizontal member (22), a flange material correcting roller (24) that is attached to a shaft (23) connected to an end of the horizontal member (22) (the end on the side on which the conveyance route exists) so that the roller (24) can rotate freely, and a flange material correcting roller positioning machine (51) for adjusting the height position of the flange material correcting roller (24).

The flange material correcting rollers (24) have a conical surface and therewith press the web material side of the flange materials (1, 2) to correct the thermal deformation from the ends of the flange materials (1, 2) to the parts of the flange materials (1, 2) joined to the web material (3). The flange material correcting rollers (24), together with the stands (11), can be moved in the directions perpendicular to the conveyance direction and fixed in a desired position in the mentioned directions. In addition, the flange material correcting rollers (24), with the help of the flange material correcting roller positioning machines (51), can be moved in the vertical directions and fixed in a desired height position. The height positions of the four flange material correcting rollers (24) can each be independently adjusted, and therefore these rollers (24) can apply respective independent pressures to the ends of the flange materials (1, 2).

The flange material correcting roller positioning machines (51) have a movable member (52) with the horizontal member (22) fitted in and fixed, a bolt (53) whose end is connected to the movable member (52) so that the bolt (53) can rotate freely, and a female screw member (54) that is fixed to the stand (11) and that has a female screw engaged with the bolt (53). In these machines (51), rotation of the bolt (53) causes the movable member (52) to move in the vertical directions together with the flange material correcting roller (24), thus allowing adjustment of the height position of this roller (24).

The flange material supporting machines (31A, 31B) are attached to the stands (11A, 11B). These machines (31A, 31B) have a pair of fixed frames (32) firmly attached to the stand (11A, 11B), and a flange material supporting roller (34) set on a shaft (33) extending between the pair of fixed frames (32) so that the roller (34) can rotate freely. The flange material supporting rollers (34) rotate along the outer surfaces of the flange materials (1, 2) and therefrom support the parts of the flange materials (1, 2) joined to the ends of the web material (3).

The web material supporting machines (41A, 41B) are attached to the cross members (13, 14) connected to the upper and lower parts of the stands (11A, 11 B). These machines (41 A, 41B) have a supporting frame (42) extending from the cross member (13, 14) toward the web material (3), and web material supporting rollers (44, 45) positioned on both sides of the supporting frame (42) and set on a shaft (43) firmly attached to the supporting frame (42) so that the rollers (44, 45) can rotate freely. The web material supporting machines (41A, 41B) are placed on and under the web material (3), and their web material supporting rollers (44, 45) positioned on and under the web material (3) support the web material (3) to limit its movement in the vertical directions.

The following is a description of the welded shaped steel manufacturing method in this embodiment.

In the corrective device (100), the positions of the flange material supporting rollers (34) in the lateral directions are adjusted, by moving the stand bases (12A, 12B), according to the shape and dimensions of the welded shaped steel to be manufactured. At the same time, the height positions of the four flange material correcting rollers (24) are each separately adjusted, using the flange material correcting roller positioning machines (51), according to the positions of the upper and lower ends (1a, 1b, 2a, 2b) and the thermal deformation amounts of the flange materials (1, 2) of the welded shaped steel. Specifically, the flange material correcting rollers (24) that press the more thermally deformed parts of the flange materials (1, 2) are positioned, using the flange material correcting roller positioning machines (51), closer to the web material (3) than are the flange material correcting rollers (24) that press the less thermally deformed parts of the flange materials (1, 2). Thus, the ends of the flange materials (1, 2) can receive different degrees of corrective force according to the thermal deformation amounts of the respective parts. In the welding part supporting device (200), the height positions of the four flange material sandwiching rollers (61) are each separately adjusted, using the mentioned vertical position adjusting devices, according to the positions of the upper and lower ends (1a, 1b, 2a, 2b) of the flange materials (1, 2) of the welded shaped steel.

After the positioning of the flange material correcting rollers (24) and other rollers, the two flange materials (1, 2) and the web material (3) already arranged so as to make an H-shaped cross section are conveyed by the plate conveying device (not illustrated) to the welding part supporting device (200).

In the welding part supporting device (200), as shown in Figures 3 and 4, the first flange material (1) is sandwiched by the flange material sandwiching rollers (61 A, 61B), the second flange material (2) by the flange material sandwiching rollers (61C, 61D) and the web material (3) by the rollers (74, 75) of the web material sandwiching roller device (71), and thus these materials are conveyed. Then the ends of the web material (3) are joined to the flange materials (1, 2) in predefined positions using laser welding. In this process, the flange materials (1, 2) undergo thermal deformation caused by heat input during welding, bending toward the web material (3).

In the corrective device (100), as shown in Figure 1, the web material (3) of the welded shaped steel conveyed from the welding part supporting device (200) is being supported from above and below by the web material supporting rollers (44, 45), and the flange materials (1, 2) are being supported from right and left by the flange material supporting rollers (34) when the four flange material correcting rollers (24) press the web material side of the flange materials (1, 2) with respective independent pressures. This operation induces respective bending moments from the ends of the flange materials (1, 2) to the parts of the flange materials (1, 2) joined to the web material (3) to make corrections according to the respective thermal deformation amounts. No or almost no bending moments are induced in the web material (3) because the parts of the flange materials (1, 2) joined to the ends of the web material (3) are supported by the flange material supporting rollers (34).

In the welded shaped steel manufacturing device and method in this embodiment of the present invention, the web material (3) is being supported by the web material supporting rollers (44, 45), and the flange materials (1, 2) are being supported by the flange material supporting rollers (34) when the four flange material correcting rollers (24) press the ends of the flange materials (1, 2) with respective independent pressures, which allows correction according to the thermal deformation amounts of the respective parts. In addition, the parts of the flange materials (1, 2) joined to the ends of the web material (3) are supported by the flange material supporting rollers (34) positioned on the outer surfaces of the flange materials (1, 2), which allows reduction of the bending moments induced in the web material (3) to zero or almost zero among the bending moments induced between the flange material correcting rollers (24) and the web material supporting rollers (44, 45). Thus, the bending deformation of the web material (3) is prevented or restrained when correcting the thermal deformation of the flange materials (1, 2).

In the welded shaped steel manufacturing device and method in this embodiment of the present invention, the height positions of the flange material correcting rollers (24) of the flange material correcting machines (21) can each be separately adjusted using the flange material correcting roller positioning machines (51), which allows adjustment of pressures applied to the ends of the flange materials (1, 2), as well as easy positioning of the flange material correcting rollers (24) at the ends of the flange materials of welded shaped steel in various shapes and dimensions.

### Other embodiments

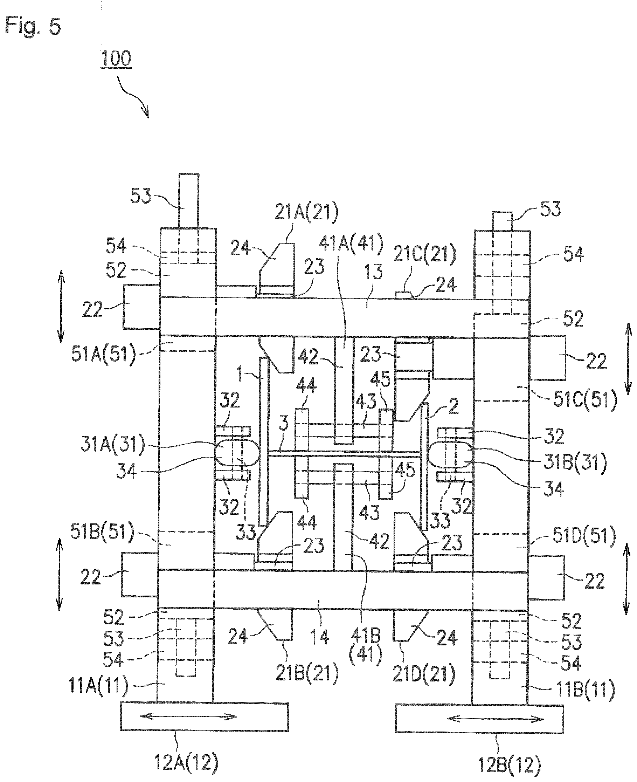

The distance between the web material supporting rollers (44) and the web material supporting rollers (45) positioned on both sides of the web material supporting machines (41) may be different from the one shown in Figure 1. The distance can be widened with a longer shaft (43), as shown in Figure 5, as much as possible unless the web material supporting rollers (44, 45) on both sides interfere with the flange material correcting rollers (24). Alternatively, the web material supporting rollers (44, 45) on both sides may have as great a width as possible unless these rollers (44, 45) interfere with the flange material correcting rollers (24). These measures allow further suppression of the bending moments induced in the web material (3), consequently further suppression of the bending deformation of the web material (3), when correcting the thermal deformation of the flange materials (1, 2).

In the original embodiment, the welding method is laser welding, but this may be replaced by, for example, electron beam welding, arc welding and high frequency welding.

In the original embodiment, the corrective device (100) has a single stage of flange material correcting machines (21), flange material supporting machines (31) and web material supporting machines (41), but the preference is that the corrective device (100) has multiple stages of flange material correcting machines (21), flange material supporting machines (31) and web material supporting machines (41) in the conveyance direction. A greater number of stages is more reliable in correcting the thermal deformation of the flange materials (1, 2).

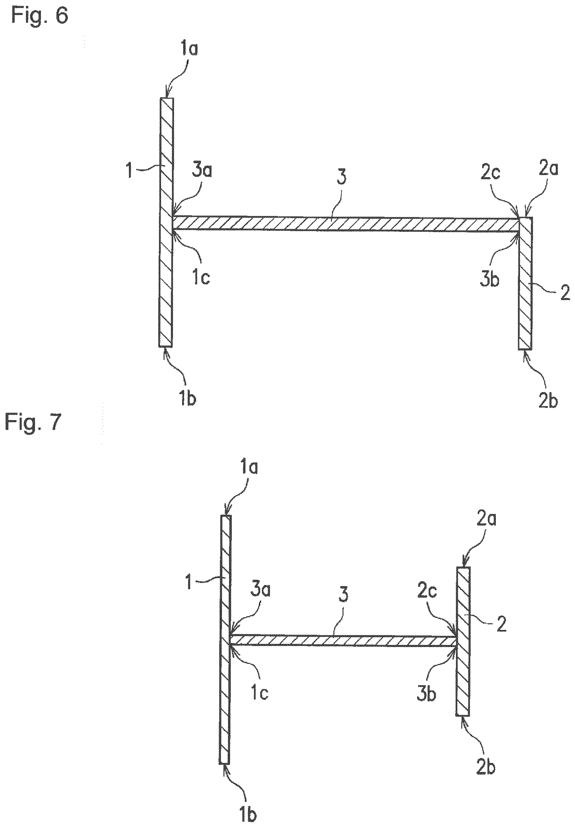

The welded shaped steel manufacturing device and method in the original embodiment can be suitably applied not only in manufacturing asymmetric welded H-shaped steel like the one shown in Figure 2, but also in manufacturing other types of asymmetric welded shaped steel, including the following types: the two flange materials joined to the ends of the web material are different in material, plate thickness, plate width or more than one of these attributes; the two flange materials are the same in material, plate thickness and plate width, but different in terms of the position for joining the end of the web material; or only one end of the web material is welded to a flange material, e.g., J-shaped or T-shaped steel. Figures 6-8 show relevant examples of asymmetric welded shaped steel.

In the asymmetric welded shaped steel in Figure 6, the first and second flange materials (1, 2) are the same in plate thickness, but different in terms of plate width and the position for joining the web material (3). For example, the first flange material (1) is a plate with a width of 100 mm, a length of 8 m and a thickness of 3.2 mm, and the position (1c) for joining the web material (3) is 50 mm apart from the upper end (1a) and 50 mm apart from the lower end (1b). The second flange material (2) is a plate with a width of 52 mm, a length of 8 m and a thickness of 3.2 mm, and the position (2c) for joining the web material (3) is 2 mm apart from the upper end (2a) and 50 mm apart from the lower end (2b). The web material (3) is a plate with a width of approximately 150 mm, a length of 8 m and a thickness of 3.2 mm, and its ends (3a, 3b) are joined to the first and second flange materials (1, 2).

To manufacture asymmetric welded shaped steel like the one shown in Figure 6, the welded shaped steel manufacturing device and method according to the present invention are used as follows: in the welding part supporting device (200), the height positions of the four flange material sandwiching rollers (61) are each separately adjusted, using the mentioned vertical position adjusting devices, according to the positions of the upper and lower ends (1a, 1b, 2a, 2b) of the flange materials (1, 2) of the welded shaped steel. Then in the corrective device (100), the positions of the flange material supporting rollers (34) in the lateral directions are each separately adjusted, by moving the stand bases (12A, 12B), according to the positions of the outer surfaces of the flange materials (1, 2) of the welded shaped steel, and the height positions of three flange material correcting rollers (24) are each separately adjusted, using the flange material correcting roller positioning machines (51), according to the positions of the upper and lower ends (1a, 1b) of the first flange material (1) and the lower end (2b) of the second flange material (2) of the welded shaped steel (see Figure 6). Note that in this type of asymmetric welded shaped steel shown in Figure 6, the second flange material (2) has almost no part above the web material (3), and therefore the upper end (2a) of the second flange material (2) does not require a flange material correcting roller (24). It follows that of the flange material correcting machines (21A-21D) shown in Figure 1, the flange material correcting machine (21 C) in the upper right may remain out of operation.

In the asymmetric welded shaped steel in Figure 7, both the first and second flange materials (1, 2) use the central part in the width direction as the position for joining the web material (3), but are different in plate thickness and plate width. For example, the first flange material (1) is a plate with a width of 100 mm, a length of 8 m and a thickness of 2.3 mm, and the position (1c) for joining the web material (3) is 50 mm apart from the upper end (1a) and 50 mm apart from the lower end (1b). The second flange material (2) is a plate with a width of 60 mm, a length of 8 m and a thickness of 3.2 mm, and the position (2c) for joining the web material (3) is 30 mm apart from the upper end (2a) and 30 mm apart from the lower end (2b). The web material (3) is a plate with a width of approximately 100 mm, a length of 8 m and a thickness of 2.3 mm, and its ends (3a, 3b) are joined to the first and second flange materials (1, 2).

The asymmetric welded shaped steel in Figure 7 is different from those shown in Figures 2, 6 and 8 in that the height positions of the lower ends (1b, 2b) of the flange materials (1, 2) are not the same when the web material (3) is in a horizontal position. However, this type of welded shaped steel can also be manufactured, enjoying suitable application of the manufacturing device according to the present invention, because the device is designed to perform welding and correction of thermal deformation based on the position of the web material (3). The welded shaped steel manufacturing device and method according to the present invention can be applied to the welded shaped steel in Figure 7 in the same way as to the welded shaped steel in Figure 2.

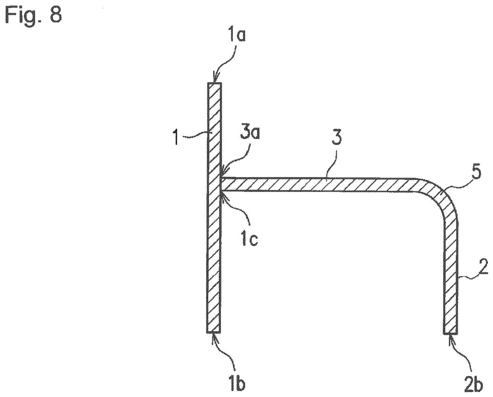

In the asymmetric welded shaped steel in Figure 8, a plate is bent so as to make a bend part (5) and two sections, one serving as a second flange material (2) and the other serving as a web material (3), forming an L-like cross section. Then one end (3a) of the web material (3) is welded to a first flange material (1), with the web material (3) positioned perpendicular to the first flange material (1), to produce J-shaped steel. In the first flange material (1), the position (1c) for joining the web material (3) is slightly off from the central part in the width direction. For example, the first flange material (1) is a plate with a width of 100 mm, a length of 8 m and a thickness of 3.2 mm. The second flange material (2) is a plate with a width of approximately 55 mm, a length of 8 m and a thickness of 3.2 mm, and continues through the bend part (5) to the web material (3). The position (1c) for joining the web material (3) is 45 mm apart from the upper end (1a) of the first flange material (1) and 55 mm apart from the lower end (1b) thereof.

To manufacture asymmetric welded shaped steel like the one shown in Figure 8, the welded shaped steel manufacturing device and method according to the present invention are used as follows: in the welding part supporting device (200), the height positions of three flange material sandwiching rollers (61A, 61B, 61C) are each separately adjusted, using the mentioned vertical position adjusting devices, according to the positions of the upper and lower ends (1a, 1b) of the first flange materials (1) and the lower end (2b) of the second flange material (2) of the welded shaped steel. Then in the corrective device (100), the position of one flange material supporting roller (34) in the lateral directions is adjusted, by moving the stand bases (12A, 12B), according to the position of the outer surface of the first flange material (1) of the welded shaped steel, and the height positions of two upper and lower flange material correcting rollers (24) connected to one stand (11 A) are each separately adjusted, using the flange material correcting roller positioning machines (51), according to the positions of the upper and lower ends (1a, 1b) of the first flange material (1) of the welded shaped steel (see Figure 8). Note that in this type of asymmetric welded shaped steel shown in Figure 8, the second flange material (2) has no part above the web material (3). Therefore, of the flange material correcting machines (21A-21D) shown in Figure 1, the flange material correcting machine (21C) in the upper right may leave its flange material correcting roller (24) out of operation. Because the second flange material (2) is sufficiently away from the welding position, the flange material correcting machine (21D) in the lower right may also leave its flange material correcting roller (24) out of operation. Thus, the lower end (2b) of the second flange material (2) may remain unpressed.

### Industrial Applicability:

The present invention can be applied to a device and a method for manufacturing welded shaped steel, correcting the thermal deformation caused by heat input during welding.

### Reference Signs List:

- 1: First flange material
- 1a: Upper end
- 1b: Lower end
- 1c: Joining position
- 2: Second flange material
- 2a: Upper end
- 2b: Lower end
- 2c: Joining position
- 3: Web material
- 3a: End
- 3b: End
- 24: Flange material correcting rollers
- 34: Flange material supporting rollers
- 44, 45: Web material supporting rollers
- 51: Flange material correcting roller positioning machines
- 100: Corrective device

## Claims

1. A welded shaped steel manufacturing device that welds orthogonally the ends of a web material to flange materials or welds one end of a web material to a flange material and that comprises a corrective device for correcting the thermal deformation of the flange materials caused by heat input during the welding,
wherein said corrective device has flange material correcting rollers that are provided at the ends of said flange materials and press the web material side of said flange materials to correct the thermal deformation from the ends of said flange materials to the parts of said flange materials joined to said web material,
and web material supporting rollers that support the web surfaces of said web material,
and those flange material correcting rollers provided at the ends of said flange materials correct said thermal deformation by applying respective independent pressures to the ends of said flange materials.

2. The welded shaped steel manufacturing device according to claim 1, wherein said corrective device has flange material supporting rollers that are positioned on the outer surfaces of said flange materials and therefrom support the parts of said flange materials joined to the ends of said web material.

3. The welded shaped steel manufacturing device according to claim 1 or claim 2,
wherein said flange material correcting rollers have a conical surface and therewith press the ends of said flange materials,
and said corrective device has flange material correcting roller positioning machines for said respective flange material correcting rollers that can move said flange material correcting rollers in the width directions of said flange materials.

4. A welded shaped steel manufacturing method that welds orthogonally the ends of a web material to flange materials or welds one end of a web material to a flange material and that includes a process for correcting the thermal deformation of the flange materials caused by heat input during the welding,
wherein the web surfaces of said web material are being supported by web material supporting rollers when flange material correcting rollers provided at the ends of said flange materials press the web material side of said flange materials with respective independent pressures and thus correct the thermal deformation from the ends of said flange materials to the parts of said flange materials joined to said web material.

5. The welded shaped steel manufacturing method according to claim 4,
wherein said correction is performed while flange material supporting rollers are positioned on the outer surfaces of said flange materials and therefrom support the parts of said flange materials joined to the ends of said web material.

6. The welded shaped steel manufacturing method according to claim 4 or claim 5,
wherein said flange material correcting rollers have a conical surface and therewith press the ends of said flange materials,
and said flange material correcting rollers are moved in the width directions of said flange materials using flange material correcting roller positioning machines prior to said correction so that said flange material correcting rollers are respectively arranged according to the positions of the ends of said flange materials.
